Europäisches Patentamt

European Patent Office

Office européen des brevets

(19)

(11) Numéro de publication: **0 123 608**
**B1**

(12) **FASCICULE DE BREVET EUROPEEN**

(45) Date de publication du fascicule du brevet:
**16.09.87**

(51) Int. Cl.⁴: **G 01 N 11/16**

(21) Numéro de dépôt: **84400747.6**

(22) Date de dépôt: **13.04.84**

(54) **Viscosimètre à tige vibrante.**

(30) Priorité: **15.04.83 FR 8306238**

(43) Date de publication de la demande:
**31.10.84 Bulletin 84/44**

(45) Mention de la délivrance du brevet:
**16.09.87 Bulletin 87/38**

(84) Etats contractants désignés:
**DE GB IT NL**

(56) Documents cités:
**FR - A - 899 057**
**FR - A - 2 151 336**
**FR - A - 2 353 847**
**US - A - 2 550 052**
**US - A - 3 270 274**
**US - A - 4 148 216**

(73) Titulaire: **SOCIETE FRANCAISE DE SERVICES S.A., 8,
rue Nobel Z.I., F-45700 Villemandeur (FR)**

(72) Inventeur: **Beaudoin, Paul, Z.I. 8, rue Nobel,
F-45700 Villemandeur (FR)**
Inventeur: **Maronne, Pierre, 8, rue Jules Massenet,
F-45120 Chalette sur Loing (FR)**

(74) Mandataire: **Fort, Jacques et al, CABINET
PLASSERAUD 84, rue d'Amsterdam, F-75009 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les viscosimètres à tige vibrante du type comportant une embase reliée à une région d'une tige métallique droite située entre les extrémités de la tige dont l'une, opposée à celle destinée à tremper dans le produit dont la viscosité est à mesurer, est munie de moyens de mise en vibration transversale de la tige et d'un capteur de mouvement. Elle trouve une application dans tous les domaines où il est nécessaire de mesurer en temps réel la viscosité d'un produit liquide ou pâteux, en circulation ou immobile, à une pression et/ou à une température pouvant varier dans de larges limites.

On connaît des viscosimètres du type défini dans le préambule de la revendication 1 (FR-A-899 057). Les moyens de mise en vibration transversale de la tige sont alimentés par un générateur à fréquence constante. Pour la rendre à peu près égale à la fréquence propre de la tige, on doit faire varier la profondeur d'immersion ou déplacer une masse le long de la tige pour modifier cette fréquence propre lorsque l'on passe d'un produit à un autre. Cela est inacceptable dans une installation industrielle. Ces viscosimètres ont une précision insuffisante pour la plupart des besoins et ne permettent pratiquement des mesures que dans une plage de viscosité faible. Pour cette raison, ils ont été abandonnés au profit de viscosimètres dont l'organe vibrant est en forme d'épingle à cheveux (FR-A-2 353 847).

Mais un tel viscosimètre, dont la vibration est excitée par une came rotative, est de constitution complexe, de prix élevé et présente une usure relativement rapide.

L'invention vise à fournir un viscosimètre du type ci-dessus défini répondant mieux que ceux antérieurement connus aux exigences de la pratique, notamment en ce qu'il présente une précision et une plage de fonctionnement en fréquence accrues; elle vise également à permettre une mesure pratiquement indépendante de la température dans une gamme de valeurs importante, sans complication notable du viscosimètre.

Dans ce but, l'invention propose notamment un viscosimètre suivant la partie caractérisante de la revendication 1.

Un tel viscosimètre permet d'effectuer des mesures dans un domaine très large de valeurs, typiquement de 1 à 1 000 000 cpo. La durée de vie du dispositif d'excitation est beaucoup plus longue que celle d'un système classique à came tournante du genre décrit dans le document FR-A-2 353 847), présentant une usure rapide des paliers, axes et ressorts en fonctionnement continue. La tige sera généralement constituée par une aiguille métallique droite de faible diamètre montée coaxialement dans un tronçon de tube dont une extrémité est fixée à l'embase et dont l'autre extrémité est fixée à l'aiguille, le nœud de vibration transversale se plaçant entre les extrémités du tube. La mesure peut être effectuée par plusieurs processus différents. Dans une première variante, le circuit est asservi de façon à maintenir constante l'amplitude du signal de sortie du capteur et le signal de mesure représentatif de la viscosité est la puissance fournie à l'électro-aimant. Dans une autre variante, le circuit fournit à l'électro-aimant une puissance constante et le signal de sortie du capteur constitue le signal de mesure.

On peut utiliser différents types de capteurs, notamment des capteurs électro-magnétiques. Toutefois, il sera en général avantageux d'utiliser une sonde de Hall, qui présente une bonne linéarité et qui est disponible dans le commerce sous forme d'un circuit complet compensé en température.

Le signal de sortie de la sonde, comme la vibration de la tige, est très sensiblement sinusoïdal; mais il est avantageux d'exciter la bobine en signaux carrés, obtenus par forte amplification et écrêtage du circuit fourni par la sonde. Cette solution permet un démarrage extrêment sûr du système, sans excitation extérieure, la moindre vibration, toujours présente dans la réalité, suffisant à déclencher le fonctionnement.

L'invention sera mieux comprise à la lecture de la description qui suit d'un viscosimètre qui en constitue un mode particulier de réalisation, donné à titre d'exemple non limitatif. La description se réfère au dessin qui l'accompagne, dans lequel:

— la figure 1 est un schéma de la partie mécanique du viscosimètre, représentée en coupe suivant un plan passant par son axe;

— la figure 2 est un synoptique du circuit de mesure et d'excitation du viscosimètre,

— les figures 3 et 4 montrent des modifications possibles de la figure 2.

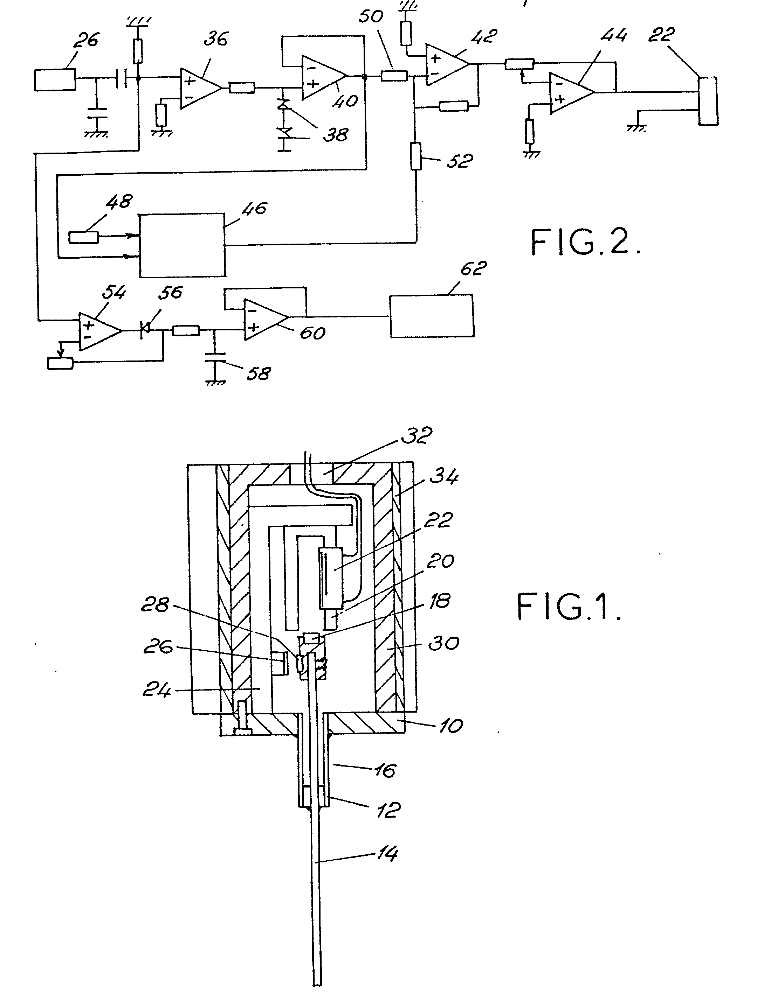

La partie électromécanique du viscosimètre, montrée en figure 1, comprend une embase 10, prévue pour être fixée sur le récipient ou la conduite dans lequel se trouve le produit liquide ou pâteux dont la viscosité est à mesurer. A l'embase 10 est fixé, généralement par emmanchement et soudage, un tube élastique 12 en métal (acier inoxydable en général). Une aiguille cylindrique 14 disposée coaxialement au tube 12 fait saillie des deux côtés de ce dernier et elle lui est fixée en une zone intermédiaire, par exemple par brasage à l'argent ou soudage par faisceau d'électrons. Des moyens pour faire osciller transversalement en flexion la tige 16 constituée par l'assemblage de l'aiguille 14 (généralement en acier dur ou en acier inoxydable) et du tube 12, comprennent un aimant permanent 18 à fort champ coercitif fixé à l'extrémité de l'aiguille qui est éloignée de celle qui plonge dans le produit. L'aimant 18 est placé dans l'entrefer d'un électro-aimant 20 muni d'une bobine d'excitation 22 et porté par une potence 24 solidaire de l'embase 10. La potence 24 porte également un capteur de déplacement 26, qu'on supposera par la suite être une sonde de Hall, coopérant avec un aimant 28 porté par l'aiguille 14.

L'ensemble ainsi constitué est placé dans une cloche de protection 30 fixée à l'embase 10 et percée d'un trou 32 de sortie des conducteurs électriques de jonction du capteur 26 et de la bobine 22 avec les circuits extérieurs. Un manchon à ailettes 34 peut être prévu autour de la cloche 30 pour évacuer la chaleur.

Cette disposition permet de réaliser la tige 16 à l'aide d'un montage mécanique simple. A titre d'exemple, on peut indiquer qu'on obtient des résultats satisfaisants avec un tube 12 en acier inoxydable de 50 mm de long, de 4 mm de diamètre interne et de 0,25 mm d'épaisseur, et une aiguille de 150 mm de long et de 3 mm de diamètre. On choisira une longueur ou un diamètre d'aiguille plus élevé lorsque la viscosité à mesurer est plus faible.

Les circuits associés à la partie électro-mécanique peuvent avoir la constitution montrée en figure 2, prévue pour mesurer le freinage de l'oscillation, donc la viscosité, par détermination de l'amplitude de l'oscillation à puissance d'excitation constante. Ce circuit fournit les signaux d'excitation sous forme de signaux carrés de tension constante, du moins à température constante. Chaque fois que la plage de température de fonctionnement est importante, ce circuit est complété par des moyens de compensation de la variation de résistance de la bobine 22 en fonction de la température.

Le capteur 26, constitué par une sonde de Hall disponible dans le commerce sous forme de plaquette munie d'un circuit de compensation propre en température (sonde 92 SS 12–2 de HONEY-WELL par exemple) fournit un signal sinusoïdal de sortie d'amplitude proportionnelle à celle de l'oscillation dans un large domaine. La sortie de ce capteur attaque une branche de mesure et une branche d'excitation de l'électro-aimant 20.

La branche d'excitation de l'électro-aimant comporte un amplificateur opérationnel 36 monté en boucle ouverte de façon à avoir un gain très élevé. Deux diodes Zener 38 montées tête-bêche entre la sortie de l'amplificateur 36 et la masse écrêtent le signal et le transforment en créneaux carrés. On peut notamment utiliser des diodes Zener ayant une tension d'amorçage de 5,1 V type BZX 46C dont les caractéristiques varient peu avec la température.

Le signal carré ainsi obtenu est appliqué à un second amplificateur opérationnel 40 monté en suiveur qui, dans le mode de réalisation illustré, attaque un amplificateur 42 monté en sommateur et dont le rôle apparaîtra plus loin. Le signal de sortie de ce dernier est appliqué à la bobine 22 par l'intermédiaire d'un amplificateur opérationnel 44 de réglage de gain.

Le circuit représenté en figure 2 comporte des moyens de compensation de température destinés à fournir des signaux carrés, à la fréquence de sortie du capteur 26, d'amplitude déterminée en fonction des variations de température de la bobine. Ce circuit de compensation ne sera pas décrit en détail, sa constitution générale pouvant être classique et à base d'amplificateurs opérationnels. Ce circuit de compensation 46 reçoit un signal prélevé à la sortie de l'amplificateur 40 et un signal de température fourni par une sonde 48 placée à proximité de la bobine 22. La sonde de température 48 peut notamment être constituée par une sonde à résistance de platine de 100 $\Omega$ à 0 °C du type K 201 S (THERMO-EST).

La sommation du signal de sortie provenant de l'amplificateur 40 et du signal de compensation de température s'effectue par un réseau de résistances 50, 52 reliées à l'entrée inverseuse de l'amplificateur opérationnel 42 de façon que celui-ci effectue une sommation.

La branche de mesure du circuit de la figure 2 comporte un amplificateur opérationnel 54 suivi d'une diode de redressement 56 et d'un condensateur de stockage 58 de façon à fonctionner en redresseur-intégrateur. Le signal continu aux bornes du condensateur 58 attaque un amplificateur 60 monté en suiveur d'adaptation d'impédance et il est fourni à un enregistreur 62 qui peut être de n'importe quel type approprié.

On voit que le viscosimètre qui vient d'être décrit garantit l'excitation de la tige à sa fréquence propre de résonance, quel que soit le produit à mesurer; permet de mesurer l'amplitude d'oscillation sans contact mécanique; évite toute usure du mécanisme d'excitation; et, enfin, de par sa conception même, est insensible aux perturbations du réseau électrique en tension et en fréquence, étant alimenté en courant continu. Au surplus, il est capable de fonctionner dans n'importe quelle orientation et présente un encombrement réduit.

Le fonctionnement du viscosimètre résultant de la description qui précède et de sa constitution, il suffira ici de l'envisager sommairement. Le viscosimètre est monté de façon que l'ensemble du tronçon de tube 12 et de la portion de tige 14 qui en déborde baigne dans le produit. Le circuit de mesure et d'excitation est mis en tension et le fonctionnement intervient immédiatement, sans aucune excitation extérieure. L'électronique peut être placée à distance importante de la partie électro-mécanique sans inconvénient. Lorsque l'étanchéité est requise, un passe-fil peut être monté sur la cloche 30 pour livrer passage aux différents conducteurs nécessaires, habituellement deux pour la bobine 22, trois pour la sonde de Hall 26 et trois pour le capteur de température de compensation.

De nombreuses variantes de réalisation sont possibles. En particulier, des capteurs autres qu'une sonde de Hall sont utilisables. Chaque type particulier de capteur exigera généralement un circuit de compensation de température propre.

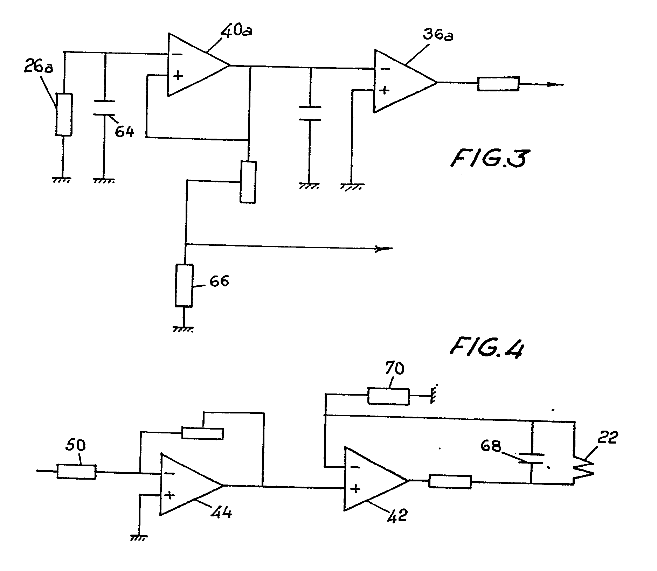

La figure 3 montre la partie de tête d'un circuit de mesure qui utilise un capteur électromagnétique 26a, muni d'un condensateur de filtrage 64. Le signal fourni est appliqué à un amplificateur opérationnel bouclé 40a qui attaque un amplificateur en boucle ouverte 36a. Une bobine 66 portée à la même température que le capteur assure la compensation. Elle relie une liaison vers la boucle de mesure à la masse.

On peut supprimer le circuit de compensation de température de la bobine 22 en le faisant fonctionner à courant constant. Sur la figure 4 ce résultat est atteint per une modification de la branche d'excitation de la figure 2. La bobine 22 est insérée dans la boucle de contre-réaction de l'amplificateur opérationnel 42 qui prend ainsi automatiquement en compte les variations d'impédance de la bobine. Le circuit est complété par un condensateur 68 d'ajustement à la fréquence de résonance moyenne et par une résistance de limitation de courant 70 assurant la sécurité.

## Revendications

1. Viscosimètre à tige vibrante, comportant une embase (10) reliée à une région d'une tige (16) métallique droite située entre les extrémités de la tige (16) dont l'une, opposée à celle destinée à tremper dans le produit dont la viscosité est à mesurer, est munie de moyens de mise en vibration transversale de la tige (16) ces moyens comportant un électro-aimant (20, 22) et un circuit d'alimentation de cet électro-aimant (20, 22), ledit viscosimètre comportant un capteur de mouvement (26) et un élément ferromagnétique (18) placé dans l'entrefer de l'électro-aimant (20, 22), caractérisé en ce que ledit élément ferromagnétique (18), généralement un aimant permanent, est fixé à la tige (16) et que le circuit d'alimentation reçoit le signal de sortie du capteur (26) et asservit la fréquence du courant électrique d'alimentation à la fréquence propre de résonance de la tige (16), variable suivant la viscosité du produit.

2. Viscosimètre selon la revendication 1, caractérisé en ce que le circuit d'alimentation est asservi de façon à maintenir constante l'amplitude du signal de sortie du capteur (26) et en ce que le signal de mesure représentatif de la viscosité est la puissance fournie à l'électro-aimant (20, 22).

3. Viscosimètre selon la revendication 1, caractérisé en ce que le circuit d'alimentation à l'électro-aimant (20, 22) une puissance constante et le signal de sortie du capteur (26), représentatif de l'amplitude de vibration, constitue le signal de mesure.

4. Viscosimètre selon la revendication 3, caractérisé en ce que le circuit d'alimentation comporte une branche de mesure de l'amplitude du signal de sortie du capteur (26) et une branche d'excitation de l'électro-aimant qui comprend un amplificateur à grand gain (36) suivi d'un écrêteur (38) fournissant un signal carré d'amplitude constante, à la fréquence du signal de sortie du capteur, et des moyens d'adaptation d'impédance et d'amplification (40, 42, 44) placés entre l'écrêteur (38) et une bobine (22) de l'électro-aimant.

5. Viscosimètre selon la revendication 4, caractérisé en ce que les moyens d'adaptation d'impédance et d'amplification comprennent un amplificateur (30, 52, 42) monté en sommateur recevant, d'une part, le signal carré écrêté, d'autre part, un signal carré de compensation des variations de résistance de la bobine (22) en fonction de la température, à la fréquence du signal de sortie du capteur.

6. Viscosimètre selon la revendication 4 ou 5, caractérisé en ce que la branche de mesure comporte un intégrateur fournissant un signal continu d'amplitude proportionnelle à l'amplitude du signal sinusoïdal de sortie du capteur.

7. Viscosimètre selon l'une quelconque des revendications précédentes, caractérisé en ce que le capteur est constitué par une sonde de Hall compensée en température.

8. Viscosimètre selon l'une quelconque des revendications précédentes, caractérisé en ce que la tige (16) est constituée par un tronçon de tube fixé à l'embase et une aiguille (14) placée coaxialement au tube, présentant une extrémité faisant saillie hors du tube pour plonger dans le produit dont la viscosité est à mesurer et une autre extrémité munie de l'élément ferro-magnétique et coopérant avec le capteur.

## Patentansprüche

1. Vibrationsstangenviskosimeter enthalten eine Grundplatte (10), die mit einem Bereich einer metallischen geraden Stange (16) verbunden ist, der sich zwischen den Enden der Stange befindet, von denen das eine demjenigen entgegengesetzt ist, das in das Produkt eintauchen soll, dessen Viskosität gemessen werden soll, und mit Mitteln zum Quervibrieren der Stange (16) versehen ist, wobei diese Mittel einen Elektromagnet (20, 22) und einen Speisekreis für diesen Elektromagnet (20, 22) aufweisen, wobei das Viskosimeter einen Bewegungsgeber (26) und ein ferromagnetisches Element (18) aufweist, das im Spalt des Elektromagnets (20, 22) angeordnet ist, dadurch gekennzeichnet, dass das ferromagnetische Element (18), im allgemeinen ein Permanentmagnet, an der Stange (16) befestigt ist, und dass der Speisekreis das Ausgangssignal des Gebers (26) empfängt und die Frequenz des elektrischen Speisestroms auf die Eigenresonanzfrequenz der Stange (16) einregelt, die entsprechend der Viskosität des Produkts veränderlich ist.

2. Viskosimeter nach Anspruch 1, dadurch gekennzeichnet, dass der Speisekreis derart geregelt wird, dass er die Amplitude des Ausgangssignals des Gebers (26) konstant hält, und dass das die Viskosität wiedergebende Messignal die zum Elektromagnet (20, 22) gelieferte Leistung ist.

3. Viskosimeter nach Anspruch 1, dadurch gekennzeichnet, dass der Speisekreis eine konstante Leistung zum Elektromagnet (20, 22) liefert, und dass das die Vibrationsamplitude wiedergebende Signal das Messignal bildet.

4. Viskosimeter nach Anspruch 3, dadurch gekennzeichnet, dass der Speisekreis einen Zweig zur Messung der Amplitude des Ausgangssignals des Gebers (26) und einen Zweig zur Regelung des Elektromagnets aufweist, der folgendes aufweist: einen Verstärker (36) mit grossem Verstärkungsgrad, gefolgt von einem Amplitudenbegrenzer (38), der ein quadratisches Signal mit konstanter Amplitude und mit der Frequenz des Ausgangssignals des Gebers liefert, und Mittel (40, 42, 44) zur Anpassung der Impedanz und der Verstärkung, die zwischen dem Amplitudenbegrenzer (38) und einer Spule (22) des Elektromagnets angeordnet sind.

5. Viskosimeter nach Anspruch 4, dadurch gekennzeichnet, dass die Mittel zur Anpassung der Impedanz und der Verstärkung einen Verstärker (30, 52, 44) aufweisen, der als Summator montiert ist, der folgendes empfängt: einerseits das quadratische amplitudenbegrenzte Signal, andererseits ein quadratisches Signal zur Kompensation der Widerstandsänderungen der Spule (22) in Abhängigkeit von der Temperatur und mit Frequenz des Ausgangssignals des Gebers.

6. Viskosimeter nach Anspruch 4 oder 5, dadurch gekennzeichnet, dass der Messzweig einen Integrator aufweist, der ein kontinuierliches Signal mit einer Amplitude liefert, die der Amplitude des sinusförmigen Ausgangssignals des Gebers proportional ist.

7. Viskosimeter nach einem der vorhergehenden Ansprüche, dadurch gekennzeichnet, dass der Geber durch eine temperaturkompensierte Hall-Sonde gebildet ist.

8. Viskosimeter nach einem der vorhergehenden Ansprüche, dadurch gekennzeichnet, dass die Stange gebildet ist durch einen an der Grundplatte festen Rohrabschnitt und durch eine zum Rohr koaxial angeordnete Nadel (14), deren eines Ende aus dem Rohr ragt, um in das Produkt einzutauchen, dessen Viskosität gemessen werden soll, und deren anderes Ende mit dem ferromagnetischen Element versehen ist und mit dem Geber zusammenarbeitet.

## Claims

1. Vibrating rod viscosity meter, comprising a base (10) connected to a portion of a straight metal rod (16) located between the ends of the rod (16), wherein one of the ends, opposite the end to be immersed, in the product whose viscosity is to be measured, is provided with drive means for maintaining the rod (16) in transversal oscillation, said means comprising an electromagnet (20, 22), and a feed circuit for said electromagnet (20, 22), said viscosity meter further having a movement sensor (26) and a ferromagnetic element (18) located in the gap of the electromagnet (20, 22), characterized in that said ferromagnetic element (18), generally a permanent magnet, is secured to the rod (16) and in that the feed circuit receives the output signal of the sensor (26) and adjusts the frequency of the feeding electric current to a value equal to the natural resonance frequency of the rod (16), said frequency depending on the viscosity of the product.

2. Viscosity meter according to claim 1, characterized in that the feed circuit is servo-controlled for maintaining the amplitude of the output signal of the sensor (26) at a constant value and in that the measurement signal representing the viscosity is the power which is applied to the electromagnet (20, 22).

3. Viscosity meter according to claim 1, characterized in that the feed circuit delivers a constant power to the electromagnet (20, 22) and in that the output signal of the sensor (26), which represents the amplitude of oscillation, constitutes the measurement signal.

4. Viscosity meter according to claim 3, characterized in that the feed circuit has a leg for measuring the magnitude of the output signal of the sensor (26) and an energization leg for energizing the electromagnet which has a high gain amplifier (36) followed with clamping means (38) which deliver a square signal of constant amplitude at the frequency of the output signal of the sensor and impedance adaptation and amplification means (40, 42, 44) connected between the clamping means (38) and a coil (22) of the electromagnet.

5. Viscosity meter according to claim 4, characterized in that the impedance adaptation and amplification means comprise an amplifier (30, 52, 42), connected to operate as a summer which receives the clamped square circuit and a square signal for compensating the changes in the resistance of the coil (22) responsive to the temperature, at the frequency of the sensor output signal.

6. Viscosity meter according to claim 4 or 5, characterized in that the measuring leg comprises an integrator which delivers a DC signal having a magnitude which is in direct relation to the magnitude of the output sine-shaped signal of the sensor.

7. Viscosity meter according to any one of the preceding claims, characterized in that the sensor is a temperature compensated Hall probe.

8. Viscosity meter according to any one of the preceding claims, characterized in that the rod (16) consists of a tube length which is secured to the base and of a needle (14) coaxial to the tube, having an end portion projecting out of the tube and dipping into the product whose viscosity is to be measured and another end portion which is provided with the ferromagnetic element and cooperates with the sensor.

FIG.2.

FIG.1.

0 123 608

FIG.3

26a

40a

36a

64

66

FIG.4

50

70

44

42

68

22